# EUROPEAN PATENT SPECIFICATION

(11) **EP 2 139 821 B1**
(45) Date of publication and mention of the grant of the patent: **15.06.2011**
(21) Application number: 08867960.0
(22) Date of filing: 22.12.2008
(51) Int. Cl.: C03C 4/00

(54) **NON-LEAD CRYSTAL GLASS WITH HIGH TRANSPARENCY AND HIGH BRIGHTNESS SUITABLE FOR MELTING IN A COLD-TOP ELECTRIC FURNACE WITH TIN OXIDE ELECTRODES**
BLEIFREIES KRISTALLGLAS MIT HOHER TRANSPARENZ UND HOHER HELLIGKEIT ZUR SCHMELZUNG IN EINEM ELEKTRISCHEN OFEN MIT KALTER SPITZE UND ZINNOXID-ELEKTRODEN
CRISTAL SANS PLOMB AYANT UNE TRANSPARENCE ÉLEVÉE ET UNE BRILLANCE ÉLEVÉE APPROPRIÉ POUR LA FUSION DANS UN FOUR ÉLECTRIQUE À VOÛTE FROIDE ÉQUIPÉ D'ÉLECTRODES EN OXYDE D'ÉTAIN

(30) Priority: 28.12.2007 IT FI20070291
(43) Date of publication of application: 06.01.2010
(73) Proprietor: RCR Cristalleria Italiana S.P.A., 53034 Colle Val D'Elsa, Siena (IT)
(72) Inventor: BOSCHI, Giancarlo, I-53034 Colle Val D'Elsa, Siena (IT)
(74) Representative: Mannucci, Michele
(86) International application number: PCT/IT2008/000779
(87) International publication number: WO 2009/084067

(56) References cited:
- WO-A-00/09456
- WO-A-2004/063108
- US-A- 5 897 678
- DATABASE WPI Week 199810 Thomson Scientific, London, GB; AN 1998-105009 XP002521579 & JP 09 328330 A (TOYO GLASS CO LTD) 22 December 1997 (1997-12-22)

## Description

### Technical field

The present invention relates in general to glass for the production of tableware, in particular glasses, carafes, bottles and similar, ashtrays, vases or similar. More specifically, the present invention relates to compositions of non-lead glass in the category "Crystal glass" according to the definition of the EEC Directive 69/493.

### State of the art

The patents existing today in the category "Crystal glass" all have characteristics unsuitable for melting in electric furnaces with electrodes made of tin oxide (SnO₂).

Melting in electric furnaces depends strictly on the resistivity of the glass. The resistivity of the glass, in turn, depends strictly on the total molar content of the alkalis present. The higher the percentage of alkalis, the lower the resistivity of the glass. There are precise limits to resistivity, below which electric melting cannot be performed.

With over 35 years of experience in melting in cold-top electric furnaces, the applicant has succeeded in identifying a total molar percentage field of alkalis, which is optimal for melting of this type. On the basis of numerous laboratory experiments, corroborated by direct furnace experience, specific diagrams have been drawn up which relate the total molar content of the alkalis to the resistivity of the glass. This has led to identification of the fields in which electric melting would be problematic or inapplicable.

It was observed that the alkali molar content must not exceed 13% and should if possible be between 11 and 12.5%. Above an alkali molar content of 13% the resistivity at the melting temperature, i.e. at a viscosity of 100 poise, would be below 6 ohm x cm.

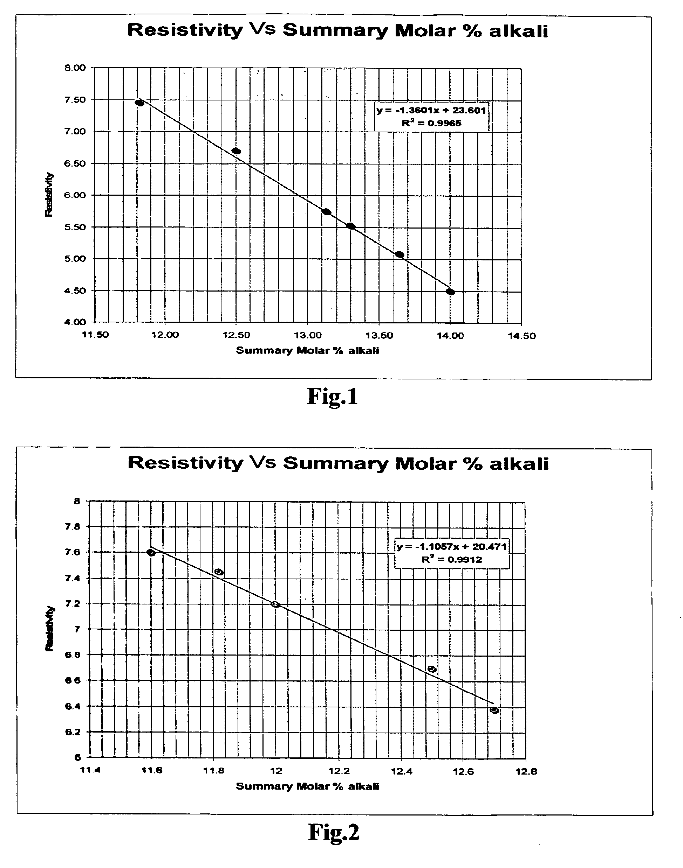

Fig. 1 shows the relation between the alkali molar content and the resistivity of the glass. More specifically, said figure contains a diagram which shows on the X axis the overall alkali molar percentage and on the Y axis the resistivity in ohm x cm for a general group of glass. Fig. 2 shows a diagram relative to a group of glass with optimal alkali composition for melting in electric furnaces.

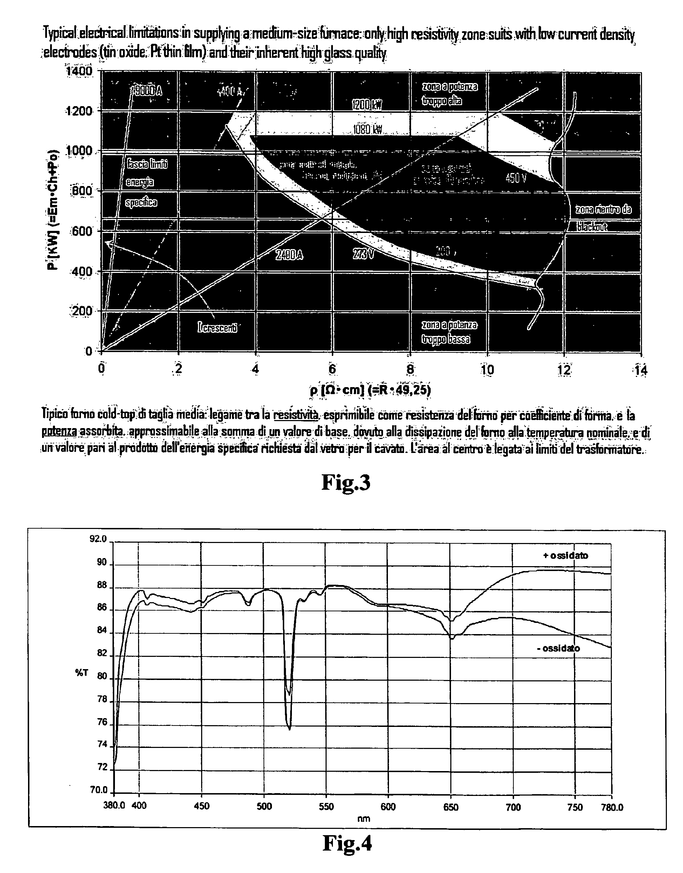

The graph of Fig. 3, which applies to an electrical power system suitable for a medium-sized furnace, relates resistivity of the glass, current intensity required and, indirectly, the maximum current density permitted for the various types of electrodes. The adoption of tin oxide electrodes allows a well-oxidized glass to be used which would cause excess wear on molybdenum electrodes, but also requires the adoption of lower current densities: for this reason it is essential for the glass to have a relatively high resistivity, in order to obtain the necessary power without overloading the electrodes.

From graphs of this type, it is evident that glass compositions with low resistivity values (below 6 ohm x cm, corresponding to a total alkali molar percentage higher than approximately 13%) will not be suitable for electric melting with electrodes made of tin oxide (SnO₂) due to the excessively high current density which tin oxide electrodes are not able to withstand. The importance of being able to perform electric melting with tin oxide rather than molybdenum (Mo) electrodes is fundamental. In fact, although the molybdenum electrodes can work at a far higher current density (1-2 A/cm²) than tin oxide electrodes (0.1-0.2 A/cm²) and can therefore also melt compositions with alkali molar percentage higher than 13%, their use would preclude, or severely limit, that of oxidizing elements such as Sb₂O₃, As₂O₃, CeO₂ etc.... The molybdenum electrodes are subject to oxidization when they come into contact with oxidizing elements present in the composition of the vitreous mass contained in the furnace (Mo+ 2O₂ = MoO₃ + O), causing a dissolution of Mo in the glass with consequent negative chromatic effect.

Said oxidization furthermore involves considerable wear and therefore the need to continuously repair the molybdenum electrodes by means of specific feed systems and/or replacement of the same. Although wear on the molybdenum electrodes is fairly slow with a limited content of oxidizing elements, as said elements increase, the wear reaches speeds that are incompatible with correct economic operation of the furnace.

On the other hand, the oxidizing elements present in the composition of the vitreous mass are very important for good oxidization of the glass in the decoloring phase and therefore for achieving high optical parameters.

In fact, with equal concentration of iron in the glass (due both to the scrap and to the composition), the oxidized form (Fe₂O₃) is preferable to the reduced form (FeO) as the oxidized form is decolored more easily, using lesser quantities of decoloring agent. The oxygen released by the above-mentioned oxidizing elements involves the transformation of FeO into Fe₂O₃ according to the formula:

3FeO + 2O₂ = Fe₂O₃ + 2O₂

The diagram of Fig. 4 shows clearly how the transmission, shown on the Y axis as a percentage of the light transmitted through a test piece with pre-set thickness with respect to the incident light on the test piece for various wavelengths (shown on the X axis), is substantially affected by the greater or lesser degree of oxidization of the glass. The upper curve relates to a more oxidized glass while the lower curve relates to a less oxidized glass.

Vitreous compositions for the production of "crystal glass" according to the above definition are known and described for example in the following patents:
- Patent Schott EP 564802 - US 5,434,111
- Patent Schott EP 0616984 - DE 4309701
- Patent Rona WO 2006 / 043909
- Patent Moser CZ 294797
- Patent Swarowsky US 7,202,188
- Patent Inn Crystal EP 547263
- Patent Vysoka Skola EP 738243
- Patent Visoka Skola WO/92 19559
- Patent Toyo US 5,897,678 - EP 893417
- Patent Toyo US 5.376,597
- Patent Corning US 5,270,269 - EP 575758
- Patent Corning US 6,184,166 - WO 00/09456
- Patent WO 2004/ 063108

Almost all the compositions described and claimed in these prior art documents have a total alkali molar content greater than 13% and are therefore not suitable for electric melting with tin oxide electrodes.

In particular EP-A-738243 describes various glass compositions, in which the sum of the alkalis always gives a molar percentage higher than 13%, which makes said glass unsuitable for melting with tin oxide electrodes. Phosphorous oxide (P₂O₅) can also be present if necessary, having the function of modifying the chemical resistance and melting temperature of the glass.

N.A.Belova et al, "Compositions and Classification of Crystal Glass for the Production of Domestic manufactured Articles", discloses crystal glass compositions having a high alkali content, which are therefore unsuitable for melting in a furnace using tin oxide electrodes.

A. Reynnolds "Electric Melting of Crystal Glass" specifically discloses the use of tin oxide electrodes for melting high lead crystals.

### Summary of the invention

In the light of the above, according to one aspect the present invention provides optimal glass formulations suitable for melting in furnaces equipped with tin oxide electrodes so that the glass can be well-oxidized, obtaining a high transparency (high percentage of light transmission).

The need to use tin oxide electrodes results in the need for compositions with a low alkali content, which produce resistance values suitable for melting with this type of electrode.

According to one aspect, the invention provides glass suitable for electric melting with tin oxide electrodes having a transmission index higher than 88, measured at a thickness of 30 mm with Illuminants **A - D65 - F11** and Observer **10°** (CIE **1964**), a refractive index equal to or higher than 1.52, a density equal to or higher than 2.45 and comprising:
- 59 to 69% in weight of SiO₂
- 7 to 16% in weight of BaO
- 0.01 to 2% in weight of P₂O₅
- 0.1 to 1.5% in weight of the sum of the following oxides: Sb₂O₃+SO₃+AS₂O₃+Ce₂O₃
- 0.01 to 0.5 % in weight of the sum of the following oxides: NiO+CoO+Er₂O₃+MnO₂+Nd₂O₃+Se+Pr₂O₃
- 9 to 15% in weight of the sum of the following oxides: K₂O+Na₂O+Li₂O
- 7 to 20% in weight of the sum of the following oxides: BaO+SrO
- 6 to 17% in weight of the sum of the following oxides: CaO+MgO+ZnO
   and in which
   - the molar ratio between Na₂O and K₂O is equal to or higher than 2
   - and the alkali molar content is equal to or lower than 13%.

Further particularly advantageous compositions according to the invention are indicated in the attached dependent claims and will be better described below with reference to some examples of embodiment.

### Brief description of the drawings

The invention will be better understood on the basis of the following detailed description of some embodiments, in which reference will be made to the accompanying drawings, in which:
Fig. 1 shows a diagram, which highlights the general resistivity trend vis-à-vis the total molar sum of the alkalis, and in which it can be seen that as the alkali content increases, the resistivity of the glass diminishes.
Fig. 2 shows a diagram analogous to that of Fig. 1, in a restricted field of the total molar sum of the alkalis to obtain optimal resistivity of the glass for electric melting with tin oxide electrodes.
Fig. 3 contains a diagram which shows the link between some chemical-physical parameters of the mixture for a typical cold-top furnace in which the link is shown between resistivity, which can be expressed as resistance of the furnace by coefficient of form, and power absorbed, which can be approximated to the sum of a base value, due to dissipation of the furnace at rated temperature, and a value equal to the product of the specific energy required by the glass and the glass pull.
Fig. 4 contains a diagram which shows the different transmission curves, using identical types of decoloring agents, of two glass specimens which differ only due to the different level of oxidization. The more oxidized glass produces a higher mean transmission value.
Fig. 5 contains a diagram which shows how the mean transmission of a glass is greater, with equal thickness, when increasing quantities of P205 up to a max. of 2.0% P205 are simultaneously present.
Fig. 6 contains a diagram which shows how measurement of the transmission of a glass is influenced by the thickness taken as a reference: the lesser the thickness, the greater the relative transmission.

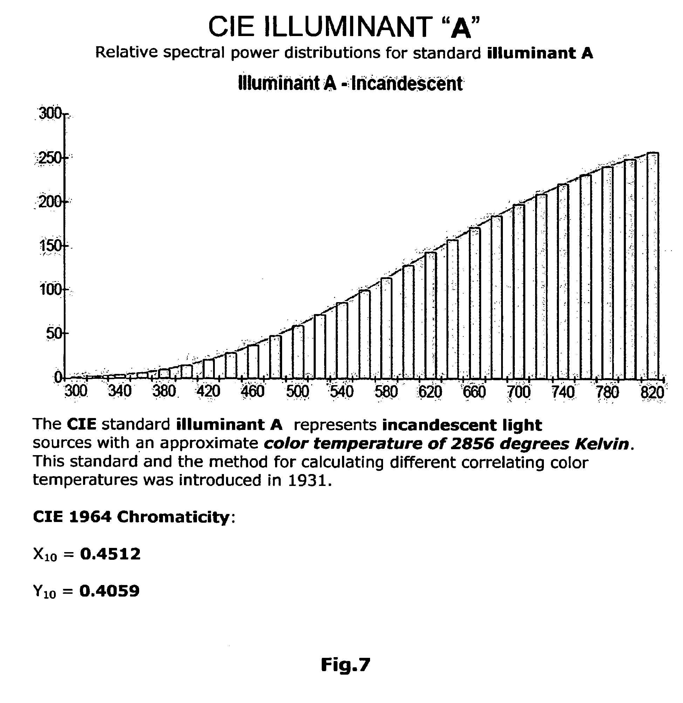

Fig.7 shows a diagram relative to distribution of the spectral energy of the illuminant (A) relative to a CIE standard of a light emitted by an incandescent source.

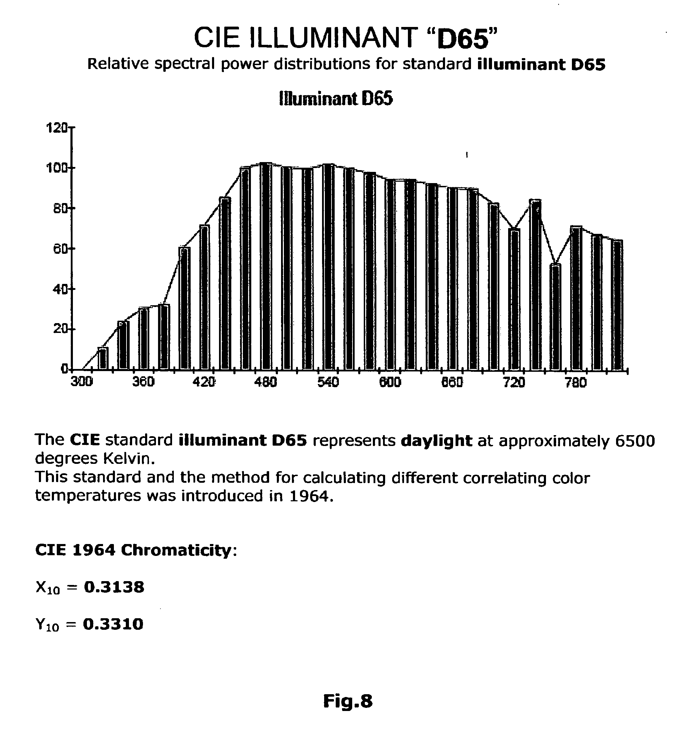

Fig.8 shows a diagram relative to distribution of the spectral energy of the illuminant (D65) relative to a CIE standard of a source which emulates noon daylight.

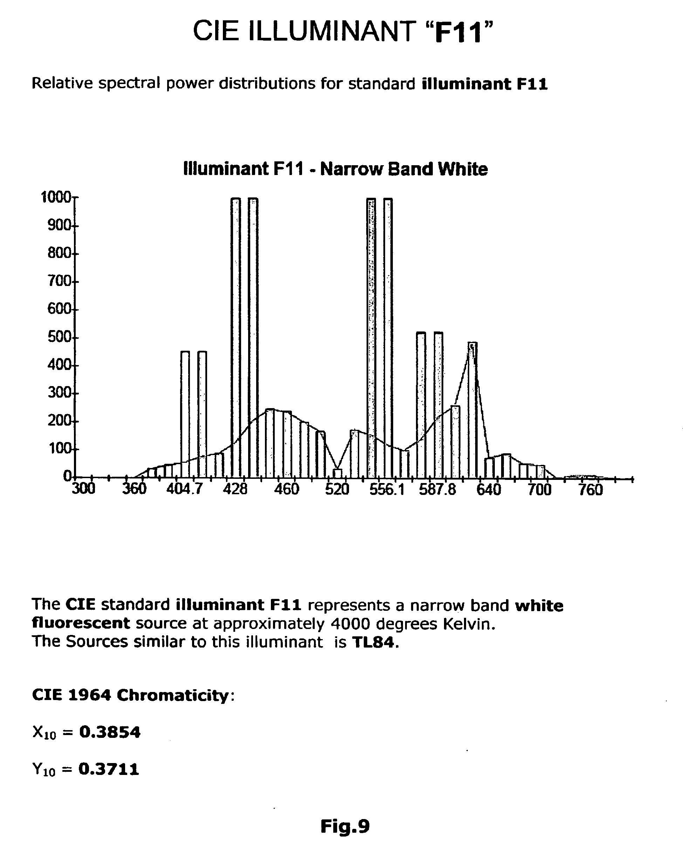

Fig.9 shows a diagram relative to distribution of the spectral energy of the illuminant (F11) relative to a CIE standard of a light emitted by a fluorescent source.

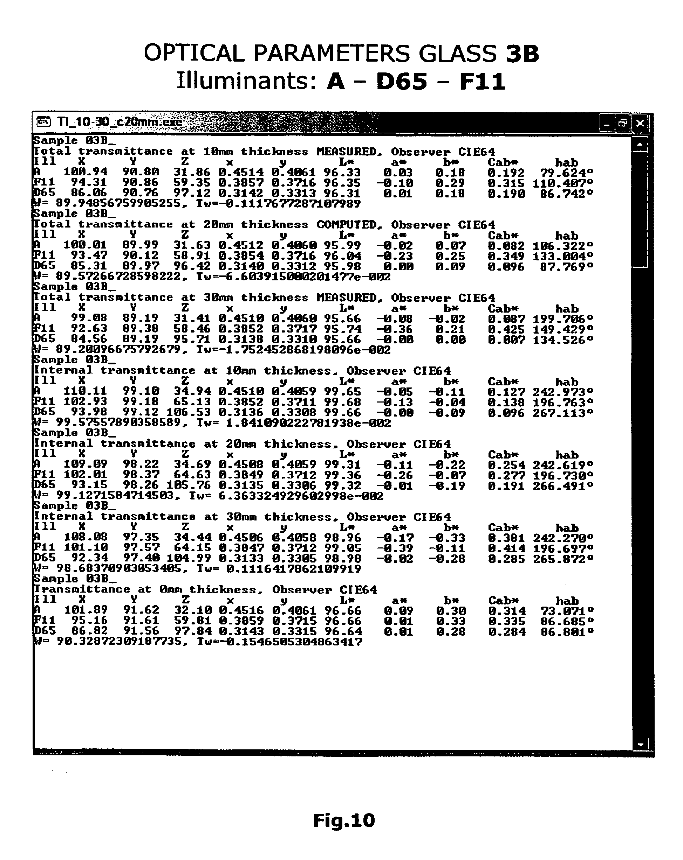

Fig. 10 shows a table relative to the optical parameters of a glass of the patent taken as reference obtained after spectral examination with the CIE standard illuminants A - D65 - F11.
Fig. 11 shows the optical values and relative chromatic diagram (CIELab) of measurements taken on an example of glass of the patent measured at a thickness of 10 mm.
Fig. 12 shows the optical values and relative chromatic diagram (CIELab) of measurements taken on an example of glass of the patent measured at a thickness of 30 mm.
Fig. 13 contains a three-dimensional diagram which shows how the probability of devitrification increases as the concentration of P₂O₅ increases, in glass containing CaO. Glass N°3 has 1% P₂O₅ while glass N°4 has 2.0% P₂O₅.
Fig. 14 contains a diagram which shows how the transmission of a glass varies with increase in its specific gravity. The glass 1D has a density lower than the glass 2D and lower than the glass 3D, but also has a transmission (%T) greater than the others (transmission % 1D>2D>3D).

### Detailed disclosure of embodiments of the invention

According to the present invention a composition has been developed for a vitrifiable mixture with characteristics suitable for respecting the parameters of resistivity suitable for electric melting with tin oxide electrodes and, at the same time, for improving the optical qualities such as transparency and brightness, also reaching refractive index and specific gravity values higher than those indicated, for crystal glass, in the directive 69/493.
Table A below highlights the field of variation of the oxides forming this glass.

**Table A**

| **OXIDES** | **% Weight** | **OXIDES** | **% Weight** |
|---|---|---|---|
| SiO₂ | 59-69 | TiO₂ | 0-2 |
| K₂O | 0-9 | B₂O₃ | 0-2 |
| Na₂O | 0-12 | ZrO₂ | 0-4 |
| U₂O | 0-1 | La₂O₃ | 0-2 |
| BaO | 7-16 | Sb₂O₃+SO₃+As₂O₃+Ce₂O₃ | 0.1-1.5 |
| SrO | 0-4 | NiO+CoO+Er₂O₃+MnO₂+ Nd₂O₃+Se+Pr₂O₃ | 0.01-0.5 |
| CaO | 0-9 | Molar ratio Na₂O/K₂O | ≥ 2 |
| MgO | 0-4 | Σ K₂O+Na₂O+Li₂O | 9-15 |
| ZnO | 0-4 | Σ BaO+SrO | 7-20 |
| P₂O₅ | 0.01-2 | Σ CaO+MgO+ZnO | 6-17 |
| Bi₂O₃ | 0-4 | ΣAl₂O₃+ZrO₂ | 0-6 |
| Al₂O₃ | 0-2 | | |

In said composition field, the alkalis (K₂O-Na₂O-Li₂O) appropriately combined will guarantee optimal resistivity for electric melting in a cold-top furnace.

The quantities of BaO and SrO will guarantee good workability of the glass in the viscosity range, in poise, between log.η=7.6 and log.η=4, in addition to increasing the specific gravity of the material and its refractive index.

The quantities of CaO, MgO and ZnO will contribute to stabilising the vitreous surface vis-à-vis the hydrolytic resistance.

Suitable additions of Al₂O₃ and/or ZrO₂ will contribute to further augmenting the hydrolytic resistance and reducing the probability of devitrification at the working temperatures and increasing (ZrO₂) the brightness of the glass.

La₂O₃ and Bi₂O₃ can be added instead of BaO for further increases in refractive index and specific gravity without affecting the workability of the glass.

TiO₂ can be added to increase dispersion of the light (brightness) and therefore also the refractive index, in addition to lowering the melting temperature.

Lastly, it has been discovered that the use of P₂O₅, in appropriate dosages, is suitable for increasing the transparency of the glass. P₂O₅, at high doses (over 20% in weight), is used in optical glass, lenses in particular, to reduce absorption in the ultraviolet range (<380nm) necessary in some fields of application. However, said glass has totally different characteristics and compositions with respect to those of glass for tableware, and in particular with respect to those of crystal glass, to which the present invention refers.

In the present context (low dosages) the phosphorous oxide was included after experimentally ascertaining its positive effect on transmission in the visible field (380-780 nm).

The following Table B indicates preferable composition ranges, selected from the general ones of Table A. In the context of these compositions, higher dosages of P₂O₅ would not be appropriate due to problems of devitrification of the glass, deriving from the simultaneous presence of non-negligible percentages of calcium oxide (CaO), necessary to maintain low viscosity at high temperatures and high viscosity at low temperatures of the vitreous mass and therefore to make it workable.

**Table B**

| **OXIDES** | **% Weight** | **OXIDES** | **% Weight** |
|---|---|---|---|
| SiO₂ | 65-68 | TiO₂ | 0-2 |
| K₂O | 3-4 | B₂O₃ | 0-2 |
| Na₂O | 7-9 | ZrO₂ | 0-4 |
| Li₂O | 0-1 | La₂O₃ | 0-2 |
| BaO | 8-10 | Sb₂O₃+SO₃+As₂O₃+Ce₂O₃ | 0.4-1.0 |
| SrO | 0-4 | NiO+CoO+Er₂O₃+MnO₂+ Nd₂O₃+Se+Pr₂O₃ | 0.01-0.5 |
| CaO | 5-8 | Molar ratio Na₂O/K₂O | ≥ 2 |
| MgO | 2-4 | Σ K₂O+Na₂O+Li₂ | 10-13 |
| ZnO | 0-4 | Σ BaO+SrO | 8-12 |
| P₂O₅ | 0.01-1.5 | Σ CaO+MgO+ZnO | 7-12 |
| Bi₂O₃ | 0-4 | Σ AlO₃+ZrO₂ | 0-6 |
| Al₂O₃ | 0-2 | | |

In Table C below, four compositions are highlighted, labelled 1B, 2B, 3B, 4B, which fall within the composition field of Table B. The four compositions vary, substantially, only as regards the content in weight of phosphorous oxide. The positive effect of the phosphorous oxide (P₂O₅) is highlighted, added to the composition in a moderate quantity, with respect to a reference composition (A), which is substantially identical to the remaining compositions 1B-4B, but without P₂O₅:

**Table C**

| OXIDES % WEIGHT | A | 1B | 2B | 3B | 4B |
|---|---|---|---|---|---|
| SiO₂ | 67.50 | 67.30 | 67.30 | 67.30 | 67.30 |
| K₂O | 3.30 | 3.30 | 3.30 | 3.30 | 3.30 |
| Na₂O | 8.50 | 8.50 | 8.50 | 8.50 | 8.50 |
| BaO | 9.70 | 9.70 | 9.40 | 8.90 | 7.90 |
| CaO | 6.80 | 6.80 | 6.80 | 6.80 | 6.80 |
| MgO | 2.75 | 2.75 | 2.75 | 2.75 | 2.75 |
| B₂O₃ | 0.70 | 0.70 | 0.70 | 0.70 | 0.70 |
| P₂O₅ | - | 0.20 | 0.50 | 1.0 | 2.0 |
| Sb₂O₃ | 0.60 | 0.60 | 0.60 | 0.60 | 0.60 |
| SO₃ | 0.15 | 0.15 | 0.15 | 0.15 | 0.15 |
| alkali molar % | 11.02 | 11.03 | 11.03 | 11.03 | 11.02 |
| nD | > 1.5250 | > 1.5250 | > 1.5250 | > 1.5250 | > 1.5250 |
| Density | >2.6000 | >2.6000 | >2.6000 | >2.6000 | >2.6000 |
| %T (D65/10°) at 30 mm Glass thickness | 87.33 | 88.51 | 88.83 | 89.19 | 88.67 |
| % L (D65/10°) at 30 mm Glass thickness | 94.88 | 95.38 | 95.51 | 95.66 | 95.12 |

For each composition the refractive index (nD), the density, the transmission percentage and the lightness measured for a test piece 30 mm thick are reported. The measurements of the transmission (T) and lightness (L) were performed with test pieces 30 mm thick in compliance with the CIE standard with illuminants **"A-D65-F11"** and observer **1964** (**10°**). The choice of a thickness of 30 mm, rather than finer thicknesses (e.g. 10 mm), is due to the fact that this glass will not be used only for the production of glasses but also heavy thicker items such as bottles, vases or centerpieces. However, since the transmission value is strictly connected with the thickness of the sample measured, the results at thicknesses of less than 30 mm would give even higher values of T.

It can be seen from Table C that the transparency and lightness increase as the percentage of phosphorous increases and are always higher than the values of the reference composition (A).

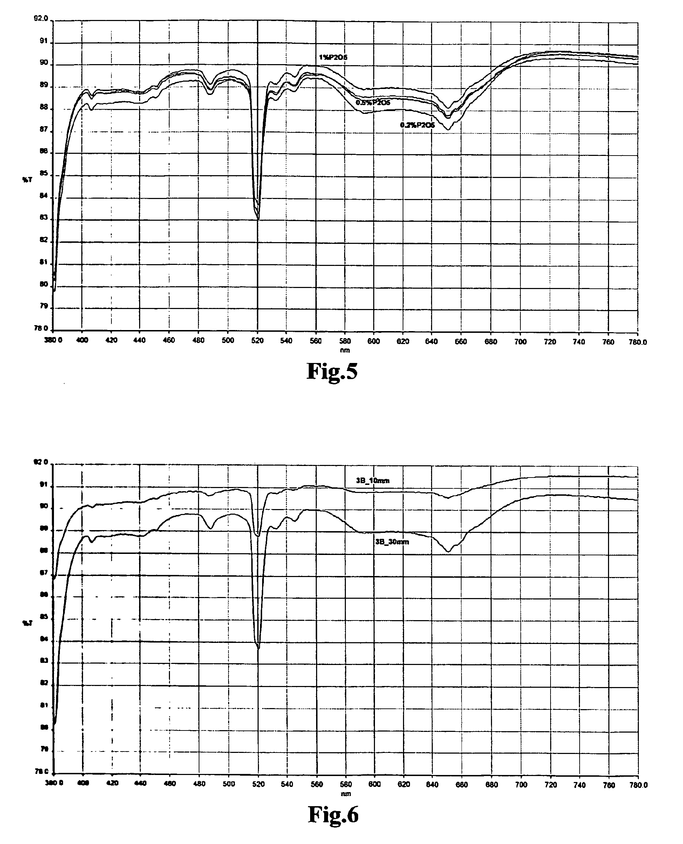

Fig. 5 shows the transmission curves for the four types of glass with composition 1B, 2B, 3B, 4B measured as indicated above for thicknesses of 30 mm. Proportional increases in the transmission occur in all the types of glass taken into consideration if measured at thicknesses of less than 30 mm. By way of example, the following Table D highlights the positive variation in transmission and lightness on the glass sample N°3B with 1% in weight of P₂O₅, measured at a thickness of 10 mm instead of 30 mm, again in compliance with the CIE standard with illuminant **"D65"** and observer **"10°"** CIE **1964**:

**Table D**

| OXIDES % WEIGHT | 3B |
|---|---|
| SiO₂ | 67.30 |
| K₂O | 3.30 |
| Na₂O | 8.50 |
| BaO | 8.90 |
| CaO | 6.80 |
| MgO | 2.75 |
| B₂O₃ | 0.70 |
| P₂O₅ | 1.00 |
| Sb₂O₃ | 0.60 |
| SO₃ | 0.15 |
| alkali molar % | 11.03 |
| nD | >1.5250 |
| Density | >2.6000 |
| % T (D65/10°) | 90.76 |
| at 10 mm glass thickness | |
| % L (D65/10°) | 96.31 |
| at 10 mm glass thickness | |

Fig. 6 shows two transmission curves for the glass of composition 3B (Tables **C** and D) for thicknesses of 30 and 10 mm. The percentage transmission is shown on the Y axis, the wavelength on the X axis.

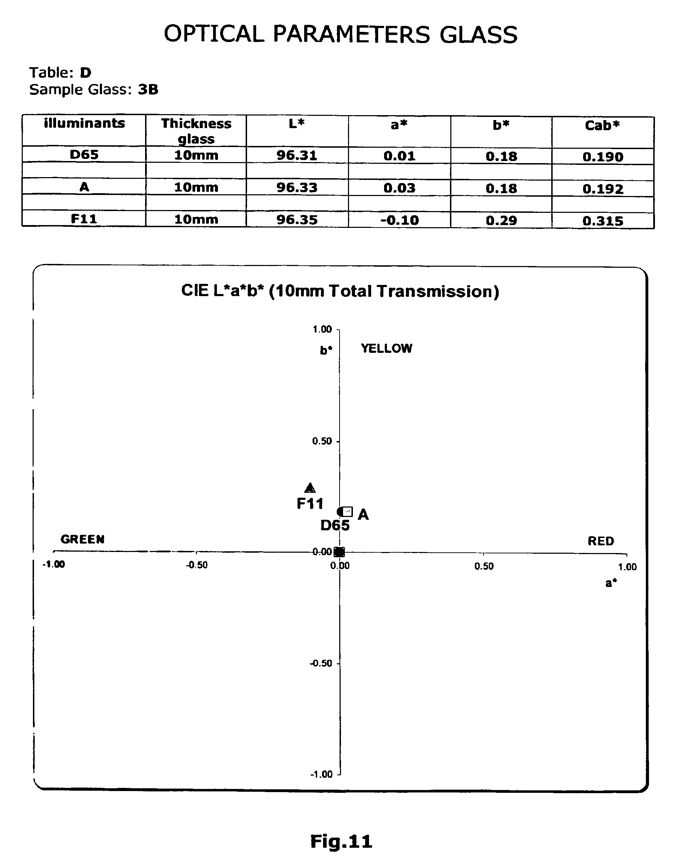

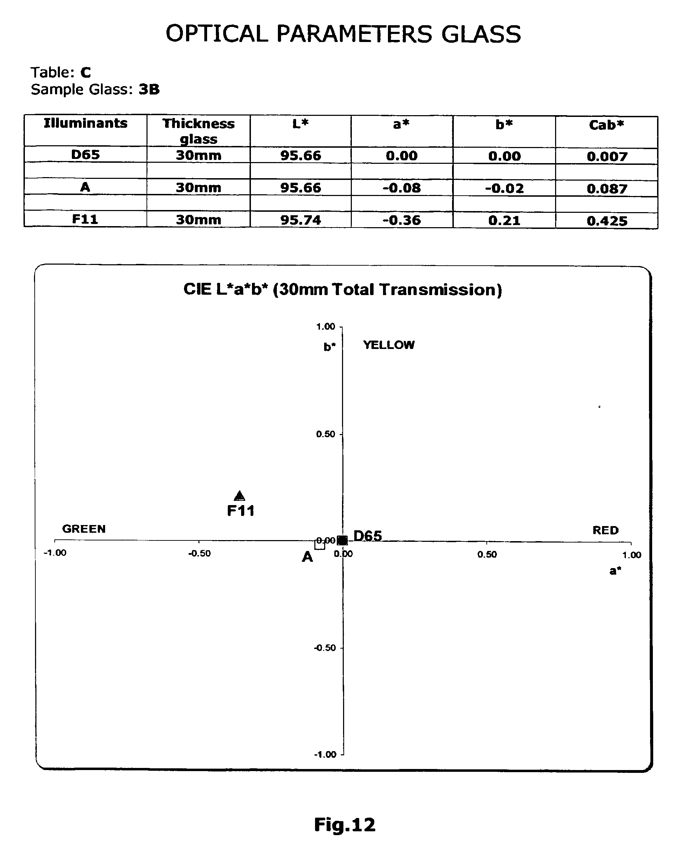

Fig. 11 and Fig. 12 show the optical parameters (L*a*b*, Cab*) and the respective CIELab chromatic diagrams for the glass of composition 3B (Tables C and D) for thicknesses of 10 and 30 mm examined with illuminants D65, A and F11 with observer 10° (CIE 1964).

The Cab*(Chroma) identifies the difference in chromatic shade of the sample measured at a certain thickness with respect to the chromatic coordinates of the illuminant taken as a reference. Low Cab* values identify low residual chromatic shades and therefore well-decolored glass. Cab*= 0 = no chromaticity.

In the case illustrated (glass 3B) the value of the Cab*, at a thickness of 30 mm, is <0.1 both for the illuminant D65 and for the illuminant A under observer 10°, taken as a reference, and <0.50 for the illuminant F11.

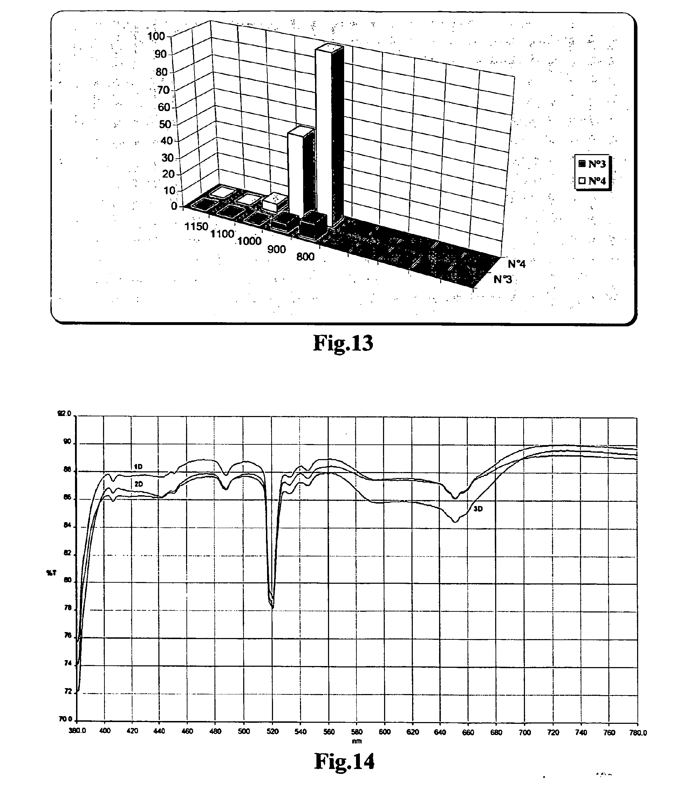

The tables and diagrams clearly show that the parameters of transmission (T) and lightness (L) of a glass are positively influenced by the addition of small quantities of P₂O₅. However, concentrations higher than 2% in weight of P₂O₅ are not recommended for this type of glass, both because a regression in the increase in transmission is observed and because problems of devitrification could occur, due to the simultaneous presence of calcium. Said phenomenon is highlighted in the diagram of Fig. **13**. The graph clearly shows how the probability of devitrification increases, at the same working temperature, as the concentration of P₂O₅ increases in glass containing CaO: sample n°3 has 1% P₂O_{5,}, n°4 has 2% P₂O₅.

The assessment of absence/presence of devitrification nuclei was observed after the glass had been left for 24 hours at the working temperatures, attributing a parameter varying from 0 to 100 depending on the number of devitrification nuclei present, according to the criterion summarized in Table E:

**Table E**

| **Devitrification assessment** | |
|---|---|
| Absence of devitrification nuclei | **0** |
| First visible perception | **1** |
| Minimum presence | **5** |
| Average presence | **10** |
| Great presence | **50** |
| Very great presence | **100** |

This aspect is very important, since high percentages of phosphorous (as in glass for optical applications or lenses) can never be used in this type of glass, therefore also this aspect is an indicator of diversity with respect to the above-mentioned glass which could never be used in the production of tableware.

The ideal qualities for the production of tableware glass are, simultaneously, a high transparency (high transmission, T) and a high brightness (high refractive index, nD). Glass with high brightness (high refractive index, such as lead crystal) does not always denote a high transparency. This is due to particular physical mechanisms of refraction/reflection of the light. The denser a body (as in the case of lead crystal) the more the light is refracted and reflected. Glass that is less dense has less refraction and reflection and therefore has greater transparency. To increase transparency, at the same density, the presence of P₂O₅ has been found to be important, whereas for brightness the refractive index of the glass has to be increased without this leading to a reduction in transmission.

According to an advantageous embodiment of the present invention, a composition is provided with an ideal combination of high transparency and high brightness, unique of its type. Table F below shows some examples in the field of compositions according to the invention, suitable for reaching particularly high density values and refractive index, while always maintaining the peculiarity of a total alkali content (below 13% molar) suitable for obtaining optimal resistivity values for electric melting with tin oxide electrodes, and characterized by a high transparency.

**Table F**

| **OXIDES** | **% Weight** | **OXIDES** | **% Weight** |
|---|---|---|---|
| SiO₂ | 61-64 | TiO₂ | 0-2 |
| K₂O | 3-5 | B₂O₃ | 0-2 |
| Na₂O | 7-9 | ZrO₂ | 0-4 |
| Li₂O | 0-1 | La₂O₃ | 0-2 |
| BaO | 10-14 | Sb₂O₃+SO₃+As₂O₃+Ce₂O₃ | 0.4-1.0 |
| SrO | 0-4 | NiO+CoO+Er₂O₃+MnO₂+ Nd₂O₃+Se+Pr₂O₃ | 0.01-0.5 |
| CaO | 5-7 | molar ratio Na₂O/K₂O | ≥ 2 |
| MgO | 2-3 | Σ K₂O+Na₂O+Li₂O | 10-13 |
| ZnO | 0-4 | Σ BaO+SrO | 10-18 |
| P₂O₅ | 0.02-1 | Σ CaO+MgO+ZnO | 7-12 |
| bi₂O₃ | 0-4 | Σ Al₂O₃+ZrO₂ | 0-4 |
| Al₂O₃ | 0-1 | | |

Glass with the characteristics shown in the following table can be extrapolated from Table F:

**Table G**

| OXIDES % WEIGHT | 1D | 2D | 3D |
|---|---|---|---|
| SiO₂ | 62.00 | 61.45 | 62.25 |
| K₂O | 4.25 | 4.25 | 4.25 |
| Na₂O | 7.80 | 7.80 | 7.80 |
| BaO | 13.00 | 13.80 | 13.00 |
| CaO | 6.80 | 6.80 | 6.80 |
| MgO | 2.75 | 2.75 | 0.75 |
| Al₂O₃ | 0.20 | 0.20 | 0.20 |
| ZnO | 0.50 | 0.50 | 0.50 |
| SrO | 0.50 | 0.50 | 2.50 |
| B₂O₃ | 0.50 | 0.25 | 0.25 |
| P₂O₅ | 1.00 | 1.00 | 1.00 |
| Sb₂O₃ | 0.50 | 0.50 | 0.50 |
| SO₃ | 0.20 | 0.20 | 0.20 |
| alkali molar % | 11.33 | 11.39 | 11.56 |
| nD | >1.5400 | >1.5420 | >1.5450 |
| Density | >2.6000 | >2.6500 | >2.7000 |
| % T (D65/10°) at 30 mm Glass thickness | 88.80 | 88.46 | 88.16 |
| % L (D65/10°) at 30 mm Glass thickness | 95.50 | 95.35 | 95.03 |

Further additions of elements such as TiO₂, ZrO₂, Bi₂O₃ and La₂O₃ can be made by reducing the percentage of BaO, to further increase the refractive index.

As can be noted, the data reported above also confirm that as the density of the glass increases, the transmission (T) and lightness (L) are reduced but, considering the measurement thickness of 30 mm, the relative values remain very high: T>88% and L> 95% respectively. These transmission values also depend on the residual chromaticity (**Cab***) of the glass which each individual, using appropriate dosages of decoloring agents, can choose as he pleases where to place in the chromatic plane. Obviously the nearer we are to the chromatic coordinates of the illuminant taken as a reference (e.g. illuminant **D65**, observer **10°** (**CIE 1964**): **X₁₀** = **0.3138**; **Y₁₀** = **0.3310** which emulates noon daylight, or illuminant **A**, observer **10°** (**CIE 1964**): **X₁₀** = **0.4512**; **Y₁₀** = **0.4059** which emulates the light of an incandescent source, or illuminant **F11**, observer **10°** (**CIE 1964**): X₁₀ = **0.3854**; Y₁₀ = **0.3711** which emulates the light of a fluorescent source), the greater the neutrality of the glass, i.e. without residual coloration also to the advantage of transparency.

The real visual perception of a glass object, lit by the various light sources that can be encountered daily, is very important as the optical qualities of the material used (luminosity, chromatic neutrality, transparency, etc.) are greatly influenced by the environment in which the object is observed.

Each observer compares the aesthetic characteristics of the material (chromatic neutrality, transparency, etc.) with an ideal personal reference: the fewer the differences he perceives, the greater the aesthetic quality he will attribute to the object in question.

These differences, as shown by the above-mentioned curves and diagrams (e.g. Fig. 11 and 12), are much more evident when thick objects are observed (30 mm or more) than with finer thicknesses (10 mm or less).

The graph of Fig. **14** shows the transmission percentage according to the wavelength for the three glass compositions 1D, 2D, 3D indicated in Table G. It highlights the different trend, with the same decoloring agents and iron content in the glass, of the transmission in the glass considered above. It can be seen from the curves in the diagram of Fig. **14** that as the density of the glass increases, which increases from the glass of composition 1D to the glass of composition 3D, transmission of the light is reduced.

## Claims

1. A crystal glass suitable for melting in an electric furnace with tin oxide electrodes having a transmission index higher than 88, measured at a thickness of 30 mm with Illuminants **D65**, **A**, **F11** and Observer **10°** (CIE **1964**), a refractive index equal to or higher than 1.52, a density equal to or higher than 2.45, comprising a percentage of PbO equal to or below 0.9% in weight, and further comprising:
- 59 to 69% in weight of SiO₂
- 7 to 16% in weight of BaO
- 0.01 to 2% in weight of P₂O₅
- 0.1 to 1.5% in weight of the sum of the following oxides: Sb₂O₃+ SO₃+As₂O₃+Ce₂O₃
- 0.01 to 0.5% in weight of the sum of the following oxides and elements: NiO+CoO+Er₂O₃+MnO₂+Nd₂O₃+Se+Pr₂O₃
- 9 to 15% in weight of the sum of the following oxides: K₂O+Na₂O+Li₂O
- 7 to 20% in weight of the sum of the following oxides: BaO+SrO
- 6 to 17% in weight of the sum of the following oxides: CaO+MgO+ZnO
and in which
- the molar ratio between Na₂O and K₂O is equal to or higher than 2
- and the alkali molar content is equal to or lower than 13%.

2. A glass as claimed in claim 1, wherein said alkali content consists of K₂O, Na₂O, Li₂O.

3. A glass as claimed in claim 1 or 2, having a composition in the field of the following table:
**Table A**
| **OXIDES** | **% Weight** | **OXIDES** | **% Weight** |
|---|---|---|---|
| SiO₂ | 59-69 | TiO₂ | 0-2 |
| K₂O | 0-9 | B₂O₃ | 0-2 |
| Na₂O | 0-12 | ZrO₂ | 0-4 |
| Li₂O | 0-1 | La₂O₃ | 0-2 |
| BaO | 7-16 | Sb₂O₃+SO₃+As₂O₃+Ce₂O₃ | 0.1-1.5 |
| SrO | 0-4 | NiO+CoO+Er₂O₃+MnO₂+ Nd₂O₃+Se+Pr₂O₃ | 0.01-0.5 |
| CaO | 0-9 | Σ K₂O+Na₂O+Li₂O | 9-15 |
| MgO | 0-4 | Σ BaO+SrO | 7-20 |
| ZnO | 0-4 | CaO+MgO+ZnO | 6-17 |
| P₂O₅ | 0.01-2 | Σ AlO₃+ZrO₂ | 0-6 |
| BhO₃ | 0-4 | | |
| Al₂O₃ | 0-2 | | |

4. A glass as claimed in claim 1 or 2, comprising a percentage in weight of the sum of the oxides BaO + SrO between 8 and 18, preferably between 8 and 12 or between 10 and 18%.

5. A glass as claimed in claim 4, comprising from 8 to 14% and preferably from 10 to 14 % or from 8 to 10 % in weight of BaO and from 0 to 4 % in weight of SrO.

6. A glass as claimed in one or more of the preceding claims, comprising from 1 to 10, preferably from 3 to 9, even more preferably from 4 to 8 and even more preferably from 5 to 7% in weight of CaO.

7. A glass as claimed in one or more of the preceding claims, comprising from 2 to 4% in weight of MgO.

8. A glass as claimed in one or more of the preceding claims, with a composition within the field defined in the following table:
**Table B**
| **OXIDES** | **% Weight** | **OXIDES** | **% Weight** |
|---|---|---|---|
| SiO₂ | 65-68 | TiO₂ | 0-2 |
| K₂O | 3-4 | B₂O₃ | 0-2 |
| Na₂O | 7-9 | ZrO₂ | 0-4 |
| Li₂O | 0-1 | La₂O₃ | 0-2 |
| BaO | 8- 10 | Sb₂O₃+SO₃+AS₂O₃+Ce₂O₃ | 0.4-1.0 |
| SrO | 0-4 | NIO+CoO+Er₂O₃+MnO₂+ Nd₂O₃+Se+Pr₂O₃ | 0.01-0.5 |
| CaO | 5-8 | K₂O+Na₂O+Li₂O | 10-13 |
| MgO | 2-4 | Σ BaO+SrO | 8-12 |
| ZnO | 0-4 | Σ CaO+MgO+ZnO | 7-12 |
| P₂O₅ | 0,01-1.5 | Σ Al₂O₃+ZrO₂ | 0-6 |
| Bi₂O₃ | 0-4 | | |
| Al₂O₃ | 0-2 | | |

9. A glass as claimed in one or more of the preceding claims, with a composition within the field defined by the following table:
**Table F**
| **OXIDES** | **% Weight** | **OXIDES** | **% Weight** |
|---|---|---|---|
| SiO₂ | 61-64 | TiO₂ | 0-2 |
| K₂O | 3-5 | B₂O₃ | 0-2 |
| Na₂O | 7-9 | ZrO₂ | 0-4 |
| Li₂O | 0-1 | La₂O₃ | 0-2 |
| BaO | 10-14 | Sb₂O₃+SO₃+As₂O₃+Ce₂O₃ | 0.4-1.0 |
| SrO | 0-4 | NiO+CoO+Er₂O₃+MnO₂+ Nd₂O₃+Se+Pr₂O₃ | 0.01-0.5 |
| CaO | 5-7 | Σ K₂O+Na₂O+Li₂O | 10-13 |
| MgO | 2-3 | Σ BaO+SrO | 10-18 |
| ZnO | 0-4 | Σ CaO+MgQ+ZnO | 7-12 |
| P₂O₅ | 0.02-1 | Σ Al₂O₃+ZrO₂ | 0-4 |
| Bi₂O₃ | 0-4 | | |
| Al₂O₃ | 0-1 | | |

10. A glass as claimed one or more of the preceding claims, comprising a percentage of PbO equal to or below 0.5% in weight.

11. A glass as claimed in one or more of the preceding claims, comprising a percentage of SrO equal to or above 0.4 and preferably between 0.4 and 4% in weight.

## Patentansprüche

1. Kristallglas, das zum Schmelzen in einem elektrischen Ofen mit Zinnoxid-Elektroden geeignet ist, mit einem Transmissionsindex größer als 88, gemessen bei einer Dicke von 30 mm mit Leuchtmitteln **D65**, **A**, **F11** und einem Beobachter bei **10°** (CIE **1964**), einem Brechungsindex gleich oder größer als 1,52, einer Dichte gleich oder größer als 2,45, mit einem Prozentsatz von PbO gleich oder unterhalb von 0,9 Gewichtsprozenten und mit ferner:
- 59 bis 69 Gewichtsprozenten SiO₂,
- 7 bis 16 Gewichtsprozenten BaO,
- 0,01 bis 2 Gewichtsprozenten P₂O₅,
- 0,1 bis 1,5 Gewichtsprozenten der Summe der folgenden Oxide:
Sb₂O₃ + SO₃ + As₂O₃ + Ce₂O₃,
- 0,01 bis 0,5 Gewichtsprozenten der Summe der folgenden Oxide und Elemente: NiO + CoO + Er₂O₃ + MnO₂ + Nd₂O₃ + Se + Pr₂O₃,
- 9 bis 15 Gewichtsprozenten der Summe der folgenden Oxide:
K₂O + Na₂O + Li₂O,
- 7 bis 20 Gewichtsprozenten der Summe der folgenden Oxide:
BaO + SrO,
- 6 bis 17 Gewichtsprozenten der Summe der folgenden Oxide:
CaO + MgO + ZnO,
und wobei
- das Molarverhältnis zwischen Na₂O und K₂O gleich oder größer als 2 ist,
- der molare Alkaligehalt gleich oder geringer als 13 % beträgt.

2. Glas nach Anspruch 1, wobei der Alkaligehalt aus K₂O, Na₂O, Li₂O besteht.

3. Glas nach einem der Ansprüche 1 oder 2 mit einer Zusammensetzung im Bereich der folgenden Tabelle:
**Tabelle A**
| **OXIDE** | **Gewichts-%** | **OXIDE** | **Gewichts-%** |
|---|---|---|---|
| SiO₂ | 59-69 | TiO₂ | 0-2 |
| K₂O | 0-9 | B₂O₃ | 0-2 |
| Na₂O | 0-12 | ZrO₂ | 0-4 |
| Li₂O | 0-1 | La₂O₃ | 0-2 |
| BaO | 7-16 | Sb₂O₃ + SO₃ + As₂O₃ + Ce₂O₃ | 0,1-1,5 |
| SrO | 0-4 | NiO + CoO + Er₂O₃ + MnO₂ + Nd₂O₃ + Se + Pr₂O₃ | 0,01-0,5 |
| CaO | 0-9 | Σ K₂O + Na₂O + Li₂O | 9-15 |
| MgO | 0-4 | Σ BaO + SrO | 7-20 |
| ZnO | 0-4 | Σ CaO + MgO + ZnO | 6-17 |
| P₂O₅ | 0,01-2 | Σ Al₂O₃ + ZrO₂ | 0-6 |
| Bi₂O₃ | 0-4 | | |
| Al₂O₃ | 0-2 | | |

4. Glas nach Anspruch 1 oder 2 mit einem Gewichtsprozentsatz der Summe der Oxide BaO + SrO zwischen 8 und 18, vorzugsweise zwischen 8 und 12 oder zwischen 10 und 18 %.

5. Glas nach Anspruch 4 mit von 8 bis 14 % und vorzugsweise von 10 bis 14 % oder von 8 bis 10 % des Gewichts von BaO und von 0 bis 4 % im Gewicht von SrO.

6. Glas nach einem oder mehreren der vorstehenden Ansprüche mit 1 bis 10, vorzugsweise 3 bis 9 und noch mehr vorzuziehen von 4 bis 8 und noch weiter vorzuziehen von 5 bis 7 Gewichtsprozenten von CaO.

7. Glas nach einem oder mehreren der vorstehenden Ansprüche mit 2 bis 4 Gewichtsprozenten von MgO.

8. Glas nach einem oder mehreren der vorstehenden Ansprüche mit einer Zusammensetzung innerhalb des in der folgenden Tabelle definierten Bereichs:
**Tabelle B**
| **OXIDE** | **Gewichts-%** | **OXIDE** | **Gewichts-%** |
|---|---|---|---|
| SiO₂ | 65-68 | TiO₂ | 0-2 |
| K₂O | 3-4 | B₂O₃ | 0-2 |
| Na₂O | 7-9 | ZrO₂ | 0-4 |
| Li₂O | 0-1 | La₂O₃ | 0-2 |
| BaO | 8-10 | Sb₂O₃ + SO₃ + As₂O₃ + Ce₂O₃ | 0,4-1,0 |
| SirO | 0-4 | NiO + CoO + Er₂O₃ + MinO₂ + Nd₂O₃ + Se + Pr₂O₃ | 0,01-0,5 |
| CaO | 5-8 | Σ K₂O + Na₂O + Li₂O | 10-13 |
| MgO | 2-4 | Σ BaO + SrO | 8-12 |
| ZnO | 0-4 | Σ CaO + MgO + ZnO | 7-12 |
| P₂O₅ | 0,01-1,5 | Σ Al₂O₃ + ZrO₂ | 0-6 |
| Bi₂O₃ | 0-4 | | |
| Al₂O₃ | 0-2 | | |

9. Glas nach einem oder mehreren der vorstehenden Ansprüche mit einer Zusammensetzung innerhalb des durch die folgende Tabelle definierten Bereichs:
**Tabelle F**
| **OXIDE** | **Gewichts-%** | **OXIDE** | **Gewichts-%** |
|---|---|---|---|
| SiO₂ | 61-64 | TiO₂ | 0-2 |
| K₂O | 3-5 | B₂O₃ | 0-2 |
| Na₂O | 7-9 | ZrO₂ | 0-4 |
| Li₂O | 0-1 | La₂O₃ | 0-2 |
| BaO | 10-14 | Sb₂O₃ + SO₃ + As₂O₃ + Ce₂O₃ | 0,4-1,0 |
| SrO | 0-4 | NiO + CoO + Er₂O₃ + MnO₂ + Nd₂O₃ + Se + Pr203 | 0,01-0,5 |
| CaO | 5-7 | Σ K₂O + Na₂O + Li₂O | 10-13 |
| MgO | 2-3 | Σ BaO + SrO | 10-18 |
| ZnO | 0-4 | ZCaO+MgO+ZnO | 7-12 |
| P₂O₅ | 0,02-1 | Σ Al₂O₃ + ZrO₂ | 0-4 |
| Bi₂O₃ | 0-4 | | |
| Al₂O₃ | 0-1 | | |

10. Glas nach einem oder mehreren der vorstehenden Ansprüche mit einem Prozentsatz von PbO gleich oder unterhalb von 0,5 Gewichtsprozenten.

11. Glas nach einem oder mehreren der vorstehenden Ansprüche mit einem Prozentsatz von SrO gleich oder oberhalb von 0,4 und vorzugsweise zwischen 0.4 und 4 Gewichtsprozenten.

## Revendications

1. Verre cristal approprié pour la fusion dans un four électrique avec des électrodes en oxyde d'étain ayant un indice de transmission supérieur à 88, mesuré à une épaisseur de 30 mm avec les illuminants **D65**, **A**, **F11** et l'observateur **10°** (CIE **1964**), un indice de réfraction égal ou supérieur à 1,52, une densité égale ou supérieure à 2,45, comprenant un pourcentage de PbO égal ou inférieur à 0,9 % en poids, et comprenant en outre :
- 59 à 69 % en poids de SiO₂
- 7 à 16 % en poids de BaO
- 0,01 à 2 % en poids de P₂O₅
- 0,1 à 1,5 % en poids de la somme des oxydes suivants :
Sb₂O₃ + SO₃ + As₂O₃ + Ce₂O₃
- 0,01 à 0,5 % en poids de la somme des oxydes et éléments suivants :
NiO + CoO + Er₂O₃ + MnO₂ + Nd₂O₃ + Se + Pr₂O₃
- 9 à 15 % en poids de la somme des oxydes suivants :
K₂O + Na₂O + Li₂O
- 7 à 20 % en poids de la somme des oxydes suivants : BaO + SrO
- 6 à 17 % en poids de la somme des oxydes suivants :
CaO + MgO + ZnO
et où
- le rapport molaire entre Na₂O et K₂O est égal ou supérieur à 2
- et la teneur molaire en alcalis est égale ou inférieure à 13 %.

2. Verre selon la revendication 1 où ladite teneur en alcalis consiste en K₂O, Na₂O, Li₂O.

3. Verre selon la revendication 1 ou 2 ayant une composition dans le domaine du tableau suivant :
**Tableau A**
| **OXYDES** | **% en poids** | **OXYDES** | **% en poids** |
|---|---|---|---|
| SiO₂ | 59-69 | TiO₂ | 0-2 |
| K₂O | 0-9 | B₂O₃ | 0-2 |
| Na₂O | 0-12 | ZrO₂ | 0-4 |
| Li₂O | 0-1 | La₂O₃ | 0-2 |
| BaO | 7-16 | Sb₂O₃ + SO₃ + As₂O₃ + Ce₂O₃ | 0,1-1,5 |
| SrO | 0-4 | NiO + CoO + Er₂O₃ + MnO₂ + Nd₂O₃ + Se + Pr₂O₃ | 0,01-0,5 |
| CaO | 0-9 | Σ K₂O + Na₂O + Li₂O | 9-15 |
| MgO | 0-4 | Σ BaO + SrO | 7-20 |
| ZnO | 0-4 | Σ CaO + MgO + ZnO | 6-17 |
| P₂O₅ | 0,01-2 | Σ Al₂O₃ + ZrO₂ | 0-6 |
| Bi₂O₃ | 0-4 | | |
| Al₂O₃ | 0-2 | | |

4. Verre selon la revendication 1 ou 2 comprenant un pourcentage en poids de la somme des oxydes BaO + SrO entre 8 et 18, de préférence entre 8 et 12 ou entre 10 et 18 %.

5. Verre selon la revendication 4 comprenant de 8 à 14 % et de préférence de 10 à 14 % ou de 8 à 10 % en poids de BaO et de 0 à 4 % en poids de SrO.

6. Verre selon une ou plusieurs des revendications précédentes comprenant de 1 à 10, de préférence de 3 à 9, de préférence encore de 4 à 8 et de préférence encore de 5 à 7 % en poids de CaO.

7. Verre selon une ou plusieurs des revendications précédentes comprenant de 2 à 4 % en poids de MgO.

8. Verre selon une ou plusieurs des revendications précédentes ayant une composition dans le domaine défini dans le tableau suivant :
**Tableau B**
| **OXYDES** | **% en poids** | **OXYDES** | **% en poids** |
|---|---|---|---|
| SiO₂ | 65-68 | TiO₂ | 0-2 |
| K₂O | 3-4 | B₂O₃ | 0-2 |
| Na₂O | 7-9 | ZrO₂ | 0-4 |
| Li₂O | 0-1 | La₂O₃ | 0-2 |
| BaO | 8-10 | Sb₂O₃ + SO₃ + As₂O₃ + Ce₂O₃ | 0,4-1,0 |
| SrO | 0-4 | NiO+CoO+Er₂O₃+MnO₂+Nd₂O₃+Se + Pr₂O₃ | 0,01-0,5 |
| CaO | 5-8 | Σ K₂O + Na₂O+ Li₂O | 10-13 |
| MgO | 2-4 | Σ BaO + SrO | 8-12 |
| ZnO | 0-4 | Σ CaO + MgO + ZnO | 7-12 |
| P₂O₅ | 0,01-1,5 | Σ Al₂O₃ + ZrO₂ | 0-6 |
| Bi₂O₃ | 0-4 | | |
| Al₂O₃ | 0-2 | | |

9. Verre selon une ou plusieurs des revendications précédentes ayant une composition dans le domaine défini par le tableau suivant :
**Tableau F**
| **OXYDES** | **% en poids** | **OXYDES** | **% en poids** |
|---|---|---|---|
| SiO₂ | 61-64 | TiO₂ | 0-2 |
| K₂O | 3-5 | B₂O₃ | 0-2 |
| Na₂O | 7-9 | ZrO₂ | 0-4 |
| Li₂O | 0-1 | La₂O₃ | 0-2 |
| BaO | 10-14 | Sb₂O₃ + SO₃ + As₂O₃ + Ce₂O₃ | 0,4-1,0 |
| SrO | 0-4 | NiO+CoO+Er₂O₃+MnO₂+Nd₂O₃+Se + Pr₂O₃ | 0,01-0,5 |
| CaO | | 5-7 Σ K₂O + Na₂O + Li₂O | 10-13 |
| MgO | 2-3 Σ | BaO + SrO | 10-18 |
| ZnO | | 0-4 Σ CaO + MgO + ZnO | 7-12 |
| P₂O₅ | | 0,02-1 Σ Al₂O₃ + ZrO₂ | 0-4 |
| Bi₂O₃ | 0-4 | | |
| Al₂O₃ | 0-1 | | |

10. Verre selon une ou plusieurs des revendications précédentes comprenant un pourcentage de PbO égal ou inférieur à 0,5 % en poids.

11. Verre selon une ou plusieurs des revendications précédentes comprenant un pourcentage de SrO égal ou supérieur à 0,4 et de préférence entre 0,4 et 4 % en poids.
